# EUROPÄISCHE PATENTSCHRIFT

(11) **EP 0 332 664 B1**
(45) Veröffentlichungstag und Bekanntmachung des Hinweises auf die Patenterteilung: **26.01.1994**
(21) Anmeldenummer: 88905684.2
(22) Anmeldetag: 13.07.1988
(51) Int. Cl.: A47B 88/04

(54) **SCHUBKASTENFÜHRUNG FÜR VORZUGSWEISE AUS KUNSTSTOFF GEFERTIGTE SCHUBKÄSTEN**
DRAWER RUNNER FOR DRAWERS PREFERABLY MADE OF PLASTIC
GUIDAGE POUR TIROIRS DE PREFERENCE EN PLASTIQUE

(30) Priorität: 07.08.1987 DE 8710830 U
(43) Veröffentlichungstag der Anmeldung: 20.09.1989
(73) Patentinhaber: PAUL HETTICH GMBH & CO., D-32269 Kirchlengern (DE)
(72) Erfinder: FAUST, Karl-Folker, D-4800 Bielefeld 15 (DE)
(74) Vertreter: Stracke, Alexander, Dipl.-Ing.
(86) Internationale Anmeldenummer: DE8800416
(87) Internationale Veröffentlichungsnummer: WO8901305

(56) Entgegenhaltungen:
- EP-A- 30 290
- DE-A- 3 347 540
- DE-A- 3 546 369
- DE-U- 8 508 596

## Beschreibung

Die vorliegende Erfindung betrifft eine aus einem aus Kunststoff gefertigten Adapter sowie einer daran lösbar befestigten Auszugsführung bestehende Schubkastenführung für vorzugsweise aus Kunststoff gefertigte Schubkästen mit im Längsseitenbereich angeformten Aufnahmetaschen für je eine Schubkastenführung, wobei eine Laufschiene der Auszugsführung am Adapter gegen Längsverschiebung im Sinne eines Auseinanderziehens gesichert ist durch eine Rasteinrichtung.

Eine Schubkastenführung der gattungsgemäßen Art ist aus der EP-A 0 030 290 bekannt. Bei der vorbekannten Schubkastenführung ist der Adapter an seinem vorderen oder seinem hinteren Ende mit unterschiedlich gestalteten Haltenasen versehen, die zur Festlegung des Adapters an einer vorderen Randleiste und der rückseitigen Außenwand des Schubkastens dienen.

Diese Konstruktion macht die Verwendung zweier unterschiedlich gestalteter Adapter erforderlich, um je eine Schubkastenführung auf der linken und der rechten Seite eines Schubkastens anzubringen.

Der vorliegenden Erfindung liegt die Aufgabe zugrunde eine Schubkastenführung der gattungsgemäßen Art zu schaffen, bei der der Adapter sowohl links wie auch rechts montierbar ist, wobei hinsichtlich der Verrastung zwischen Adapter einerseits und Laufschiene andererseits eine der Rechts-Links-Verwendbarkeit des Adapters adäquate Konstruktion erreicht wird.

Diese Aufgabe wird erfindungsgemäß dadurch gelöst, daß der Adapter sowohl in einer linken wie auch in einer rechten Aufnahmetasche montierbar ist, daß die Rasteinrichtung in eine Rastaussparung der Laufschiene einrastbar ist und daß die Rasteinrichtung mindestens einen Rastnocken umfaßt, welcher gegenüber der dem Adapter in seiner Längserstreckung halbierenden Mittelebene spiegelbildlich ausgebildet ist bzw. das bei zwei Rastnocken diese gegenüber der Mittelebene des Adapters spiegelbildlich zueinander angeordnet sind.

Durch diese vergleichsweise einfache konstruktive Maßnahme ist sichergestellt, daß die Laufschiene einer derartigen Auszugsführung unabhängig von der Frage, ob die komplette Schubkastenführung an einem Schubkasten links oder rechts verwendet wird, immer in der gleichen Lage gegen Längsverschiebung gesichert wird.

Im Rahmen der vorliegenden Erfindung ist es sowohl möglich, die Rastnocken auf einer gemeinsamen, gegenüber der Laufschiene seitlich ausfederbaren Lasche des Adapters anzuordnen, es ist aber auch denkbar, jeden Rastnocken auf einer separaten, gegenüber der Laufschiene seitlich ausfederbaren Lasche des Adapters anzuordnen.

Die erstgenannte Konstruktionsform ist insofern vorzuziehen, als diese bei der Herstellung des Adapters besonders einfach zu verwirklichen ist.

Falls allerdings aus konstruktiven Gründen, die schon in der Festlegung des Adapters an einem Schubkasten bedingt sein können, eine mittige Anordnung der Rastnocken auf einer gemeinsamen Lasche nicht möglich ist, bietet sich die zweitgenannte Konstruktionsform an, mit der der übergeordnete Gedanke der Neuerung ebenso zu verwirklichen ist, daß nämlich die Verrastung der Laufschiene gegenüber dem Adapter unabhängig von der Frage der Längs- oder Rechts-Verwendung immer an der gleichen Stelle erfolgen kann.

Weitere Merkmale der Erfindung sind Gegenstand weiterer Unteransprüche.

In den beigefügten Zeichnungen sind Ausführungsbeispiele der Erfindung dargestellt, die im Folgenden näher beschrieben werden.

Es zeigen:
- Figur 1: einen Vertikalschnitt durch den linken Seitenwandbereich eines Schubkastens eines Möbels mit einer aus einem Adapter und einer Auszugsführung bestehenden Schubkastenführung,
- Figur 2: eine Ansicht des Adapters der Schubkastenführung in Richtung des Pfeiles II in Figur 1,
- Figur 3: eine der Figur 2 entsprechende Ansicht eines Adapters nach einem weiteren Ausführungsbeispiel der Neuerung,
- Figur 4: einen Schnitt nach der Linie IV-IV in Figur 2,
- Figur 5: eine Ansicht in Richtung des Pfeiles V in Figur 4,
- Figur 6: einen Schnitt nach der Linie VI-VI in Figur 4,
- Figur 7: eine Ansicht der Laufschiene der Schubkastenführung gemäß Figur 1 in Blickrichtung des Pfeiles II in Figur 1,
- Figur 8: eine Ansicht in Richtung des Pfeiles VIII in Figur 7.

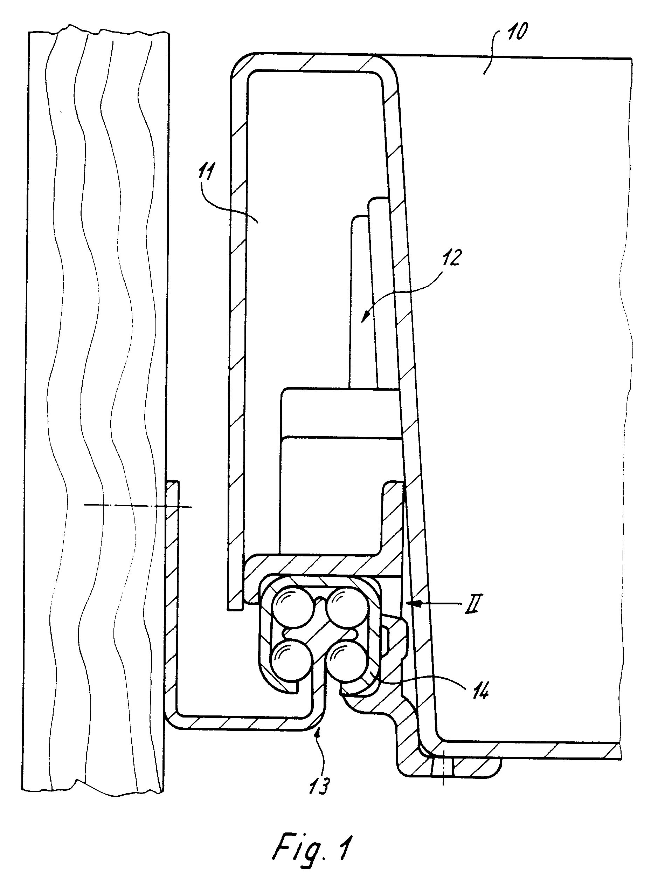

In Figur 1 ist mit dem Bezugszeichen 10 ein aus Kunststoff gefertigter Schubkasten bezeichnet, der im dargestellten, linksseitigen Längsseitenbereich ebenso wie im nichtdargestellten, rechtsseitigen Längsseitenbereich mit einer angeformten Aufnahmetasche 11 für einen Adapter 12 versehen ist.

Dieser Adapter 12 ist so gestaltet, daß er sowohl in der linksseitigen wie auch in der rechtsseitigen Aufnahmetasche 11 des Schubkastens 10 montiert werden kann.

Gemeinsam mit einer Auszugsführung 13, deren Laufschiene 14 am Adapter 12 lösbar befestigt ist, bildet dieser Adapter 12 eine Schubkastenführung.

Die Laufschiene 14 der Auszugsführung 13 wird gegen Längsverschiebung relativ zum Adapter 12 im Sinne eines Auseinanderziehens gesichert durch eine noch zu beschreibende Rasteinrichtung.

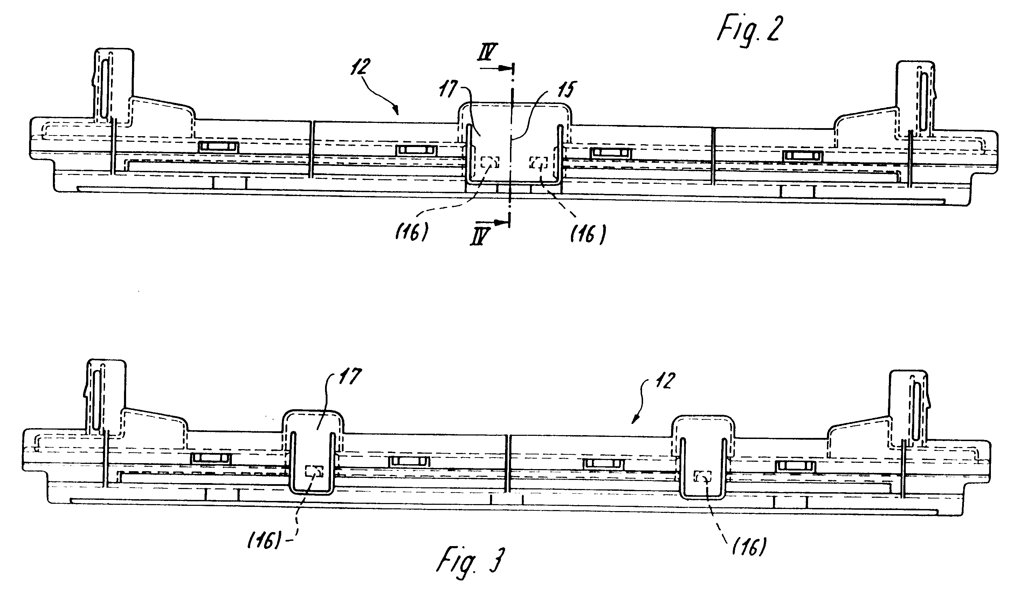

Zur Erläuterung der Rasteinrichtung wird auf die Figuren 2 sowie 4 bis 8 verwiesen.

In Figur 2 ist der Adapter 12 in der durch den Pfeil II in Figur 1 gekennzeichneten Blickrichtung in Ansicht dargestellt.

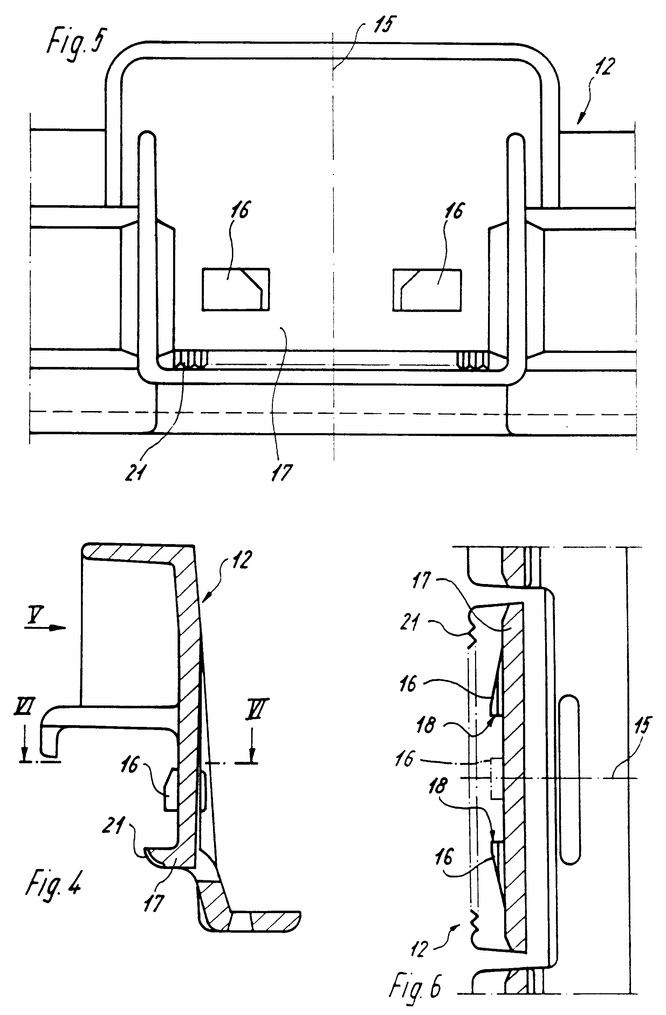

Diese Figur 2 macht in Verbindung mit den Figuren 4 bis 6 deutlich, daß der Adapter 12 nicht nur -bezogen auf die den Adapter in seiner Längserstreckung halbierenden Mittelebene 15- symmetrisch ausgebildet ist, sondern daß darüber hinaus spiegelbildlich zu dieser Mittelebene 15 zwei Rastnocken 16 auf einer gemeinsamen, gegenüber der am Adapter 12 festgelegten Laufschiene 14 seitlich ausfederbaren Lasche 17 angeordnet sind.

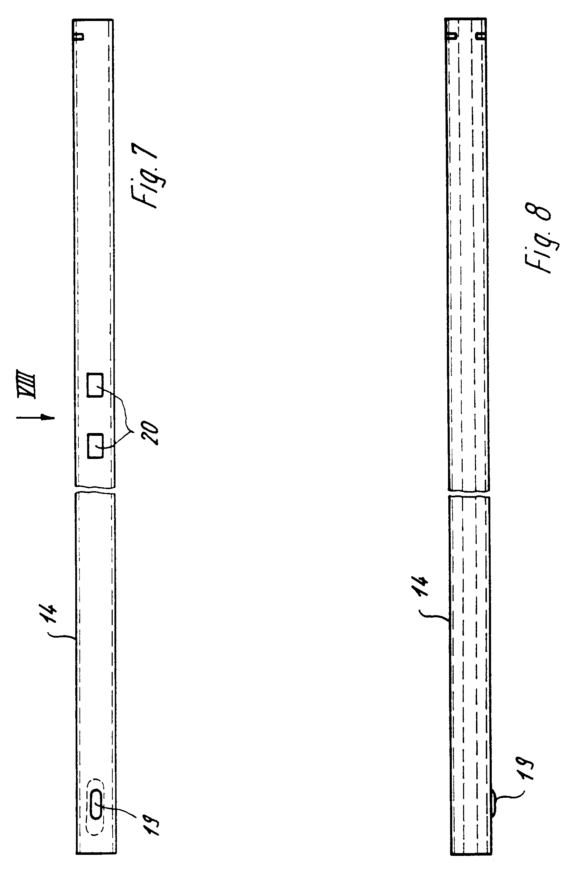

Wie besonders aus Figur 6 hervorgeht, sind die beiden Rastnocken 16, ausgehend von ihren der Mittelebene 15 des Adapters zugewandten Stirnkanten 18 in Richtung der freien Enden des Adapters 12 abgeflacht. Hierdurch werden Anlaufschrägen gebildet, die zu einem seitlichen Ausfedern der Lasche 17 beim Einführen der Laufschiene 14 in den Adapter 12 führen.

Die Figuren 7 und 8 machen deutlich, daß die Laufschiene 14 an ihrem, in Auszugsrichtung der Schubkastenführung gesehen vorderen Ende mit einer ausgeprägten Sicke 19 ausgestattet ist, welche in einer Flucht liegt mit den Nocken 16. Diese Sicke 19, die auch durch eine andere Erhebung im vorderen Bereich der Laufschiene 14 ersetzt werden kann, stellt sicher, daß die Laufschiene 14 auch dann sicher über eine Stirnkante 18 eines Rastnockens 16 hinweggleiten kann, wenn die Lasche 17 aufgrund der ihr innewohnenden Elastizität beim Einführen der Laufschiene 14 in den Adapter 12 gegenüber der entsprechenden Wandung der Laufschiene 14 geringfügig vorstehen würde.

Die Laufschiene 14 ist in ihrem mittelren Bereich mit zwei Rastaussparungen 20 versehen, die ebenfalls spiegelbildlich zur mittleren Ebene der Laufschiene 14 angeordnet sind.

Je nachdem, in welcher Einbaulage der Adapter 12 verwendet wird, greift in eine der besagten Rastaussparungen 20 einer der beiden Rastnocken 16 des Adapters 12 ein und sichert so die Laufschiene 14 gegen eine Längsverschiebung relativ zum Adapter im Sinne eines Auseinanderziehens dieser beiden Bauteile. Dabei ist der jeweils benachbarte Rastnocken 16 in die zugeordnete zweite Rastaussparung 20 eingerastet. Figur 3 macht deutlich, daß die beiden Rastnocken 16 jeweils auf einer separaten Lasche 17 des Adapters 12 angeordnet sein können, allerdings sind diese beiden Rastnocken 16 auf ihre separaten Laschen 17 wiederum spiegelbildlich zur Mittelebene 15 des Adapters 12 angeordnet.

Im Falle einer Adapter-Konstruktion nach dem Ausführungsbeispiel gemäß Figur 2 besteht auch die Möglichkeit, im mittleren Bereich der Laufschiene 13 lediglich eine entsprechend langgestreckte Rastaussparung 20 anzuordnen.

Werden hingegen die beiden Rastnocken 16 auf relativ weit auseinanderliegenden, separaten Laschen 17 angeordnet, wie in Figur 3 gezeigt, ist aus Stabilitätsgründen die Anbringung von zwei unabhängig voneinander eingestanzten Rastaussparungen 20 im Bereich der Laufschiene 14 vorzuziehen.

Wie die Figuren 4 bis 6 deutlich machen, ist am in Gebrauchslage unteren Ende der Lasche 17 ein geriffeltes Griffstück 21 vorgesehen, welches nicht nur die Laufschiene 14 über einen Teilbereich abstützt, sondern insbesondere dafür bestimmt ist, die Lasche 17 auch von Hand bequem ausfedern zu können, dann nämlich, wenn die Laufschiene 14 bewußt vom Adapter 12 getrennt werden soll.

In Figur 6 ist durch gestrichelte Linien angedeutet, daß im Rahmen der Neuerung auch lediglich ein Rastnocken 16 vorgesehen werden kann, der dann zu der Mittelebene 15 des Adapters spiegelbildlich ausgebildet sein muß. In diesem Falle ist auch nur eine Rastaussparung in der Laufschiene 14 erforderlich.

## Patentansprüche

1. Aus einem aus Kunststoff gefertigten Adapter (12) sowie einer daran lösbar befestigten Auszugsführung (13) bestehende Schubkastenführung für vorzugsweise aus Kunststoff gefertigte Schubkästen (10) mit im Längsseitenbereich angeformten Aufnahmetaschen (11) für je eine Schubkastenführung, wobei eine Laufschiene (14) der Auszugsführung (13) am Adapter (12) gegen Längsverschiebung im Sinne eines Auseinanderziehens gesichert ist durch eine Rasteinrichtung, **dadurch gekennzeichnet,** daß der Adapter (12) sowohl in einer linken wie auch in einer rechten Aufnahmetasche (11) montierbar ist, daß die Rasteinrichtung in eine Rastaussparung (20) der Laufschiene (14) einrastbar ist und daß die Rasteinrichtung mindestens einen Rastnocken (16) umfaßt, welcher gegenüber der den Adapter (12) in seiner Längserstreckung halbierenden Mittelebene (15) spiegelbildlich ausgebildet ist bzw. daß bei zwei Rastnocken (16) diese gegenüber der Mittelebene (15) des Adapters (12) spiegelbildlich zueinander angeordnet sind.

2. Schubkastenführung nach Anspruch 1, dadurch gekennzeichnet, daß die Rastnocken (16) auf einer gemeinsamen, gegenüber der Laufschiene (14) seitlich ausfederbaren Lasche (17) des Adapters (12) angeordnet sind.

3. Schubkastenführung nach Anspruch 1, dadurch gekennzeichnet, daß jeder Rastnocken (16) auf einer separaten, gegenüber der Laufschiene (14) seitlich ausfederbare Lasche (17) des Adapters (12) angeordnet ist.

4. Schubkastenführung nach einem oder mehreren der Ansprüche 1 bis 3, dadurch gekennzeichnet, daß den beiden Rastnocken (16) eine Rastaussparung (20) zugeordnet ist, deren wirksame Länge dem Abstand der beiden Rastnocken (16) zueinander entspricht.

5. Schubkastenführung nach einem oder mehreren der Ansprüche 1 bis 3, dadurch gekennzeichnet, daß jedem Rastnocken (16) eine separate Rastaussparung (20) innerhalb der Laufschiene (14) zugeordnet ist.

6. Schubkastenführung nach einem oder mehreren der vorhergehenden Ansprüche, dadurch gekennzeichnet, daß die Rastnocken (16) von ihren der Mittelebene (15) des Adapters zugewandten Stirnkanten (18) ausgehend zum freien Ende des Adapters (12) hin abfallend ausgebildet sind und daß an dem in Auszugsrichtung gesehen vorderen Ende der Laufschiene (14) eine in einer Flucht mit den Rastnocken (16) liegende, ausgeprägte Sicke oder dergleichen vorgesehen ist.

7. Schubkastenführung nach einem oder mehreren der Ansprüche 1 bis 6, dadurch gekennzeichnet, daß am unteren Ende der Lasche (17) oder der Laschen (17) ein die Laufschiene (14) teilweise unterstützendes, geriffeltes Griffstück (21) vorgesehen ist.

## Claims

1. A drawer guide consisting of an adaptor (12) made of plastics material and a pull-out guide (13) detachably secured thereto, for drawers (10) which are preferably made of a plastics material and which have receiving pockets (11) formed in the longitudinal side region thereof, each for a drawer guide, wherein one runner (14) of the pull-out guide (13) on the adaptor (12) is secured by means of a stop device from becoming longitudinally displaced in the sense of being pulled apart, **characterised in that** the adaptor (12) can be mounted both in a left-hand and in a right-hand receiving pocket (11), that the stop device can be engaged in a stop recess (20) of the runner (14) and that the stop device has at least one stop cam (16) which is of a mirror-image configuration relative to the central plane (15) which halves the adaptor (12) in its longitudinal extent, and that when there are two stop cams (16) they are arranged in mirror- image manner to one another relative to the central plane (15) of the adaptor (12).

2. A drawer guide according to Claim 1, characterised in that the stop cams (16) are arranged on a common plate (17) of the adaptor (12) which plate is sprung laterally relative to the runner (14).

3. A drawer guide according to Claim 1, characterised in that each stop cam (16) is arranged on a separate plate (17) of the adaptor (12), which plate is sprung laterally relative to the runner (14).

4. A drawer guide according to one or more of Claims 1 to 3, characterised in that a stop recess (20) is associated with the two stop cams (16), the operative length of which recess corresponds to the distance between the two stop cams (16).

5. A drawer guide according to one or more of Claims 1 to 3, characterised in that associated with each stop cam (16) is a separate stop recess (20) inside the runner (14).

6. A drawer guide according to one or more of the preceding claims, characterised in that the stop cams (16) are designed so that they fall away from their end edges (18) which face the central plane (15) of the adaptor towards the free end of the adaptor (12), and that provided at the front end, viewed in the pull-out direction, of the runner (14) is a bead, or the like, which is moulded out and disposed in alignment with the stop cams (16).

7. A drawer guide according to one or more of Claims 1 to 6, characterised in that provided at the bottom end of the plate (17) or the plates (17) is a grooved handle (21) which partly supports the runner (14).

## Revendications

1. Dispositif de guidage de tiroir composé d'un adaptateur (12) réalisé en matière plastique et d'un guide de tirage (13) fixé de façon démontable sur celui-ci, pour des tiroirs (10) réalisés de préférence en matière plastique et comprenant sur leur longueur des volumes d'accueil (11) destinés à recevoir chacun un dispositif de guidage, dans lequel un rail de glissement (14) du guide de tirage (13) est bloqué sur l'adaptateur (12) contre le glissement longitudinal conduisant à une extraction, par un dispositif d'arrêt, caractérisé par le fait que l'adaptateur (12) peut être monté aussi bien dans un volume d'accueil (11) droit que gauche, que le dispositif d'arrêt se bloque dans un évidement d'arrêt (20) du rail de glissement (14), et que le dispositif d'arrêt comprend au moins une butée d'arrêt (16), laquelle présente une forme symétrique par rapport au plan médian (15) coupant en deux l'adaptateur (12) dans le sens de sa longueur, ou bien que, dans le cas de deux butées d'arrêt (16), celles-ci sont disposées de manière symétrique de part et d'autre du plan médian (15) de l'adaptateur (12).

2. Dispositif de guidage de tiroir selon la revendication 1, caractérisé par le fait que les butées d'arrêt (16) sont placées sur une même patte (17) de l'adaptateur (12), dégageable latéralement de façon élastique par rapport au rail de glissement (14).

3. Dispositif de guidage de tiroir selon la revendication 1, caractérisé par le fait que chaque butée d'arrêt (16) est placée sur une patte (17) séparée de l'adaptateur (12), dégageable latéralement de façon élastique par rapport au rail de glissement (14).

4. Dispositif de guidage de tiroir selon l'une ou plusieurs des revendications 1 à 3, caractérisé par le fait qu'aux deux butées d'arrêt (16) est attribué un évidement d'arrêt, dont la longueur efficace correspond à la distance entre les deux butées d'arrêt (16).

5. Dispositif de guidage de tiroir selon l'une ou plusieurs des revendications 1 à 3, caractérisé par le fait qu'à chaque butée d'arrêt (16) correspond un évidement d'arrêt séparé dans le rail de glissement (14).

6. Dispositif de guidage de tiroir selon l'une ou plusieurs des revendications précédentes, caractérisé par le fait que les butées d'arrêt (16) présentent une forme inclinée depuis leurs arêtes terminales tournées vers le plan médian (15), en direction de l'extrémité libre de l'adaptateur (12), et que, sur l'extrémité frontale du rail de glissement (14) vu selon la direction d'extraction, est prévue une moulure prononcée, ou similaire, positionnée en alignement avec les butées d'arrêt (16).

7. Dispositif de guidage de tiroir selon l'une ou plusieurs des revendications 1 à 6, caractérisé par le fait qu'à l'extrémité inférieure de la patte (17) ou des pattes (17) est prévue une griffe cannelée (21) soutenant en partie le rail de glissement (14).
